# EUROPEAN PATENT SPECIFICATION

(11) **EP 2 917 403 B1**
(45) Date of publication and mention of the grant of the patent: **04.07.2018**
(21) Application number: 13853497.9
(22) Date of filing: 30.10.2013
(51) Int. Cl.: D21H 11/18, D21C 9/06, D21C 9/18, C08L 1/04, F26B 3/36

(54) **MIXING DRYING OF NANOFIBRILLATED POLYSACCHARIDE**
MISCHTROCKNUNG VON NANOFIBRILLIERTEM POLYSACCHARID
SÉCHAGE PAR MÉLANGE DE POLYSACCHARIDE NANOFIBRILLÉ

(30) Priority: 09.11.2012 SE 1251280
(43) Date of publication of application: 16.09.2015
(73) Proprietor: Stora Enso Oyj, 00101 Helsinki (FI)
(72) Inventor: BACKFOLK, Kaj, FI-53130 Lappeenranta (FI); SAXELL, Heidi, FI-01360 Vantaa (FI); HEISKANEN, Isto, FI-55100 Imatra (FI); AXRUP, Lars, S-663 41 Hammarö (SE); LAND HENSDAL, Cecilia, S-66731 Forshaga (SE); JOKELA, Veikko, FI-55300 Rauha (FI); SAUKKONEN, Esa, FI-53850 Lappeenranta (FI); KOTILAINEN, Ari, FI-00101 Helsinki (FI); KASTINEN, Henri, FI-00101 Helsinki (FI); KAUPPI, Anna, FI-00101 Helsinki (FI)
(74) Representative: AWA Sweden AB
(86) International application number: PCT/IB2013/059778
(87) International publication number: WO 2014/072886

(56) References cited:
- EP-A1- 0 846 703
- WO-A1-98/57109
- WO-A1-2012/107642
- WO-A2-2011/139749
- WO-A2-2011/139749
- GB-A- 839 569
- JP-A- 2006 064 308
- US-B2- 6 871 744

## Description

### Technical field

The present document relates to a method of drying an aqueous suspension of microfibrillated cellulose to obtain a substantially dry microfibrillated cellulose product. More particularly, the present disclosure relates to a microfibrillated cellulose product obtainable by such method and the uses thereof.

### Background

Nanofibrillated polysaccharides, such as for instance microfibrillated cellulose, have many end uses, such as in food, composites, paper, paints, plastics, cosmetics, and medical products, in which it would be good to be able to dosage nanofibrillated polysaccharide in a dry form so that the original properties of wet nanofibrillated polysaccharide would be retained.

Microfibrillated cellulose which is added and used in composites is typically in a dry form.

When microfibrillated cellulose is used in composites one should ensure that micro fibrils are clearly separated from each other and that micro fibrils are very well dispersed on the matrix.

A low solid content dispersion of microfibrillated cellulose in water is usually a gel having pseudoplastic or thixotropic viscosity properties because the fibrils are very well dispersed in the matrix (water). Upon drying, however, the properties of microfibrillated cellulose are severely changed. It's dispersibility, hydration and rheological properties are lost or at least substantially reduced or changed, depending on the severity of the drying. Typically after drying, micro and nano fibrils are bound together and substantially less separate micro or nano fibrils are present which hence affects the characteristic property, for instance, as defined by a highly nanofibrillated cellulose can be found via different analysis of the nanofibrillated cellulose.

Conventional drying techniques for drying MFC or nanofibrillated polysaccharides currently used today are e.g. spray drying and freeze drying. Freeze drying produces the best quality MFC in terms of preserving original properties and in re-dispersability. However, both the operating and investment costs are high and the process can be difficult to scale up to industrial processing. Spray drying, which can rather easily be scaled up, has high operation costs and during which process also hornification of fibrils is prone to occur.

The term "hornification" refers to the stiffening of the polymer structure that occurs in lignocellulosic materials when they are dried or otherwise dewatered. Because of structural changes in the wood pulp fibers upon drying the internal fiber shrinks. Often the fibers needs to be rewetted, or resuspended in water for practical use and due to these structural changes the original properties, i.e. being in a gel form having pseudoplastic or thixotropic viscosity, is not regained. The effect of hornification may be identified in those physical paper or wood pulp properties that are related to hydration or swelling, such as burst or tensile properties. (Hornification - its origin and interpretation in wood pulps, J.M.B. Fernandes Diniz, M.H. Gil, J.A.A.M. Castro, Wood Sci Technol 37 (2004) 489-494).

In articles (e.g. LeCompte T.R. (1931), Papier (34), p.1193, Jayme, G. (1944) Papier-Fabr (42), p.187, Lyne, L. M., Gallay, W. (1954) Measurements of wet web strength, Tappi Journal 37(12):694-697, Higgins, H.G., McKenzie, A.W. (1963) The structure and properties of paper XIV: Effects of drying on cellulose fibers and the problem of maintaining pulp strength) concerning hornification phenomenon and pulp swelling after drying and rewetting there are suggestions made that pulp could be less hornificated if its dried in such a way that fibers do not stick together during drying. According to Lyne and Gallay (1950) rigorous agitation during boiling of pulp neutralizes the dehydrating effect, and that mechanical effect prevents to a large extent the loss in swelling which otherwise occurs.

It is however impractical for pulp and papermakers to dry fibers under e.g. vigorous agitation.

Spray-drying of fibrillated cellulose is described e.g. in WO 2011/139749 A2. An aqueous suspension of nanofibrils (NFC), which are regarded as a category of MFC, is atomized in a drying chamber of a drying apparatus. A drying gas, such as ambient air, may be used as an aid to evaporate the water present in the suspension, yielding dry NFC as the product. The teachings even include coating the NFC particles with sodium silicate prior to the atomizing step.

WO 2011/095335 A1 describes a process, in which MFC is formed by defibrillation of a suspension of cellulose fibers and a liquid, which is miscible with liquid CO₂, and then replacing said liquid in the suspension by liquid CO₂, and finally removing the CO₂ by evaporation so as to yield dry MFC. The process is claimed to overcome the MFC deterioration problems afflicting ordinary oven-drying and freeze-drying processes.

Still there is room for an improved process of drying nanofibrillated polysaccharide comprising composites, which is simpler to carry out while yielding a dry MFC composite material, without loss of important redispersibility properties, since, if strong hornifiction or agglomeration occurs during drying the beneficial properties of cellulosic fibrils or fibrillated aggregates are not obtained. It it thus preferable that the dried composite maintains its characteristics when dispersed in aqueous systems, other solvents or e.g. polymeric matrices. It is also necessary to find a solution that prevents hornification without necessary use of chemical additives, which might affect the properties of the final composition.

### Summary

It is an object of the present disclosure, to provide an improved or alternative method of drying microfibrillated cellulose, which eliminates or alleviates at least some of the disadvantages of the prior art.

The invention is defined by the independent claims. Embodiments are set forth in the appended dependent claims and in the following description and drawings.

According to a first aspect, there is provided a method for drying microfibrillated celulose to obtain a substantially dry microfibrillated cellulose product, comprising the following steps:
(i) providing an aqueous suspension of microfibrillated cellulose;
(ii) increasing the solid contents said suspension, thereby forming a high solid contents microfibrillated cellulose suspension; and
(iii) drying said high solid contents microfibrillated cellulose suspension, through a simultaneous heating and mixing operation, comprising a grinding operation.

By "aqueous suspension of microfribrillated cellulse" (MFC) is meant that the solid contents of the suspension is in the range of 0.01wt-% to 25 wt-%. This suspensiom or dispersion in water may be in a gel form. The said suspension might also contain functional additives which assist in re-dispersability but they can also have another function such as providing optical effects or improved compoundability in polymers.

By "substantially dry MFC product" is meant that the water content in the MFC product is reduced to a level where the product may be in a powder form, but still being suitable for re-dispersion in a solvent such as water. As such the solids content of the product may be in the range of 50-99 wt-%.

By this method there is achieved a way of drying MFC without causing hornification problems of the micro fibrils and pulp swelling after drying and rewetting. There is further provided a way of drying the MFC in a energy efficient manner.

By the mixing operation removal of water may be affected by evaporation or using co-solvents, such as ethanol or isopropanol. The co-solvents may be recycled during the mixing and heating operation.

The mixing operation also provides for micro fibrils that are clearly separated from each other and that micro fibrils are very well dispersed in the matrix, which is normally achieved by a refining or homogenizing step a the process for producing e.g. MFC.

According to one alternative of the first aspect the solid contents may, in step (ii), be increased to >15 wt-%, or to > 20 wt-% , or to > 25 wt-% , or to > 30 wt-%.

This solids content is based on the MFC-water ratio, but it may in certain cases contain other substances in which case the solids content may be even higher.

The grinding operation may be performed in a PVC mixer or by any similar method, such as a high speed mixer, where the mechanical energy is converted into heat in the suspension whereby water is caused to evaporate. Alternativley part of the energy may be used to provide for a fibrillation or to cut fibers. Since the solid content, or the dry contents, of the suspension is relativley high at the onset of mixing the shear forces, and friction evolved in the suspension becomes greater thus resulting in an increased temperature. At a solids content of >15-20 wt-% the MFC solution is viscous, thus causing greater friction.

Step (ii) may further comprise any one of a centrifugal force operation, pressing operation and dewatering operation.

The dewatering operation may comprise an electro-osmosis operation or electric field induced dewatering, electric field flow fractionation and the pressing operation may comprise a wet pressing operation.

According to one alternative of the first aspect, the temperature of the suspension, at step (iii) may be in the range of 75-99 °C, preferably about 80-85 °C.

The temperature is thus kept relativley low, which is advantageous not only in that less energy is consumed, but also in that the effect on hornification of the micro fibrils may be reduced, as hornification is prone to occur at a higher temperature. It may be that the temperature towards the end of the drying process is more important to control, or to keep at a low level in order to prevent hornification of the fibrils, and that the temperature at the beginning of the process, i.e. when the solids content is still relativley low may be higher than the preferred temperature range. This increase in temperature may mainly be created through the mechanical energy provided to the suspension by the mixing operation.

According to an alternative embodiment the suspension may further be heated from about room temperature to the range of 75-99 °C.

According to one alternative embodiment, the temperature of the suspension in or at step (iii) may be in the range of from 40 to 50 °C, which is a sufficient temperature for the drying to occur. This means that the heat evolved from the mixing operation it self may be sufficient for the drying.

According to one embodiment of the method according to the first aspect there may further be provided a simultaneous heating and mixing operation in step (iii). This means that the suspension may, in step (iii) be actively heated in addition to the heat evolved during the mixing operation. This "active heating" may for instance be used at the onset of the mixing operation to achieve a higher starting temperature and thus a more efficient drying. According to another embodiment this heating operation may be combined with a subsequent cooling operation to ensure the optimal temperature of the suspension as the solid content is increased, i.e. towards the end of the drying operation, in order to prevent any hornification or other harmful structural changes from occuring.

According to another embodiment of the first aspect step (iii) may be performed under vacuum.

By introducing a vacuum, or performing the drying step under vacuum it is further possible to reduce both the energy needed and the drying temperature, which may lead to a further reduction in the hornification of the micro fibrils. If vacuum is introduced the heat developed trough the mechanical energy provided to the suspension may be lower than under normal pressure.

The nano- och microfibrillated cellulose may be obtained through conventional methos such as mechanical liberation of fibrils or by acid hydrolysis of cellulosic materials, e.g. disclosed in WO 2009021687 A1, or MFC suspension produced by enzymatic hydrolysis of Kraft pulp cellulose, e.g. disclosed in WO2011004300 A1, acid hydrolysis followed by high pressure homogenization, e.g. disclosed in US20100279019, or by any other means known to the skilled person. One method of producing nanofibrils is by spinning or e-spinning cellulose or polysaccharides or mixtures thereof.

The concentration of MFC is usually about 1-6 % and the remaining part is water or components used to promote e.g. runnability or used for grafting of fibrillated cellulose such as Na-CMC.

According to yet an alternative of the first aspeact there may further be provided a drying additive in step (iii).

By introducing a drying additive the drying process may be event further improved. Such additives are disclosed in CA1208631. A drying additive may also be a solvent.

According to a second aspect there is provided a substantially dry nanofibrillated polysaccharide product obtainable by the method according to the first aspect.

By "substantially dry NFP product" is meant that the water content in the NFP product is reduced to a level where the product may be in a powder form, but still being suitable for re-dispersion, in a solvent such as water or solid phase.

As such the solids content of the product may be in the range of 50-99 wt-%. In a preferred embodiment the solids content is in the range of 75-90 wt-%.

The dry NFP or MFC product obtained through the method described above may have very good and well separated straight individual micro fibrils when re-dispersed in water, i.e. the hornification problems normally associated with drying of NFP has been greatly reduced. The applicability of this dried NFP product may therefore be greatly increased for applications such as composites, paints, food and pharmaceutical uses.

According to a third aspect there is provided a use of a dry nanofibrillated polysaccharide product according to the second aspect in, or for the production of composites.

According to a fourth aspect there is provided a use of a dry nanofibrillated polysaccharide product according to the second aspect, for any one of a rheology application, fixative agent, strength enhancing agent, emulsifying agent, excipient, paper applications, film forming agent, moisture control agent, and in paper or paperboard of products thereof.

The dry product may thus be used in, for instance, textiles, food, pharmaceuticals, paints, concrete, asphalt, rubber, plastic-wood composites, inks, etc.

### Description of Embodiments

In the below, a method of drying a nanofibrillated polysaccharide, or as it may be a microfibrillated cellulose is disclosed. These definintions may be used alternately in the below, but is not intended to exclude one or the other. The definitions for nanofibrillated polysaccharide and microfibrillated cellulose may also be found in the below description.

In a preferred embodiment, however, the method is applied to the drying of microfibrillated cellulose or nanofibrillated cellulose, in a pure form or alternativley including additives.

According to one embodiment the method of drying microfibrillated cellose (MFC), is provided through a process in which an aqueous suspension of MFC is provided. The solid contents of this suspension may be in the range of 0.01wt-% to 25 wt-%, according to one embodiment the solids content is the range of 0,01 wt-% to 15 wt-% (can be 20-25%).

The solids content or the consistency of this aqueous suspension is then increased to at least 15 % by weight. According to one embodiment the solids content of the suspension is raised to 30-35 %.

This increase may be performed by a mechanical dewatering. According to one embodiment this dewatering is performed by centrifugation. According to another embodiment it is performed through pressing, such as wet pressing in a paper making machine. According to yet an alternative embodiment the dewatering is performed through electro-osmosis combined with mechanical pressure. Other alternative ways to provide for an increase in the solids content of the suspension may include, but is not limited to any one of a decanter centrifuge, wire press, belt press,extended dewatering nips, and magnetically induced dewatering. The dewatering may also be performed by heating to a suitable temperature, evaporation, or adsorption e.g. into felt or using radiation such as IR, NIR or microwave. When selecting the suitable manner to increase the solids content care must however be taken that the chosen method does not, in a negative way, influence the occurrence of hornification, which the skilled person would readily be able to determine.

According to the method, after the solids content has been increased the suspension is dried. This drying operation is performed through a simultaneous grinding and heating of the suspension, for instance in a mixing apparatus, and thereby effecting removal of water by evaporation.

Alternatively the drying operation is performed under vacuum, i.e. the suspension is treated under vacuum.

According to one alternative the drying is performed through a grinding drying operation, e.g. by PVC mixer similar method where heat and mechanical energy is introduced at the same time as water is allowed to evaporate.

According to one embodiment, at the drying operation, the temperature of the suspension is in the range of 75-99 °C, preferably about 80 °C. For instance the mixing apparatus may heat the dispersion from about room temperature to the range of 75-99 °C.

The effect of the temperature in drying step of the process is critical, which was found here. An optimal temperture, particularly at the end of drying, prevents hornification of the fibers. By optimal temperature is thus meant a temperature which is low enough to prevent the hornification process.

According to one alternative a temperature range of from 40 to 50 °C is a low enough temperature.

According to one embodiment the drying step can be done in presence of different additives, such as those disclosed in CA1208631.

According to one embodiment the suspension may be cooled or kept at a constant temperature by cooling or heating the suspension. The cooling or heating may be performed by conventional means known to the skilled person.

According to one alternative embodiment the temperature of the suspension may be further increased, for instance in the mixing appartus after the NFP suspension has been dried to a water content of at most 10 wt-%.

The total drying time at the drying operation step may be in the range of 15-40 min, preferably about 30 min, thus allowing for a fast and drying operation which may be incorporated into a industrial process. The drying time may be dependent on the initial solids content of the suspension, the energy input, any additives and the batch size.

### Definition of microfibrillated cellulose

The microfibrillated cellulose (MFC) is also known as nanocellulose. It is a material typically made from wood cellulose fibers, both from hardwood or softwood fibers. It can also be made from microbial sources, agricultural fibers such as wheat straw pulp, bamboo or other non-wood fiber sources. In microfibrillated cellulose the individual microfibrils have been partly or totally detached from each other. A microfibrillated cellulose nanofiber is normally very thin (∼20 nm) and the length is often between 100 nm to 10 µm. However, the microfibrils may also be longer, for example between 10-200 µm, but lengths even 2000 µm can be found due to wide length distribution. Fibers that has been fibrillated and which have microfibrils on the surface and microfibrils that are separated and located in a water phase of a slurry are included in the definition MFC. Furthermore, whiskers are also included in the definition MFC.

### Example

Microfibrillated fibers were dewatered in paper machine type of wire section and subsequent wet pressing to a solids content of about 30-35 % by weight. The high solids MFC was dosaged into a PVC mixer and mixed so that the temperature was increased to about 80°C, until the MFC was substantially dry, after which the temperature was further incrased to about 95°C. In this example a PVC mixer having a size of was 200/100 liters was used. The motor was of 50 kW.

The total drying time was about 30 min and the batch size was 25 kg wet MFC dispersion, which gave about 9 kg dry MFC.

After rewetting of micro fibrillated cellulose it was studied under microscope; and very good and well separated straight individual micro fibrils could be seen. This in turn implies that little or no hornification of the micro fibrils has taken place, which was confirmed with water retention value measurements. This type of micro fibrills are very well suitable for composites and other applications where dry micro fibrillated cellulose is preferred instead of wet.

## Claims

1. A method for drying microfibrillated cellulose to obtain a substantially dry microfibrillated cellulose product, comprising the following steps:
(i) providing an aqueous suspension of microfibrillated cellulose;
(ii) increasing the solid content of said suspension, thereby forming a high solid content microfibrillated cellulose suspension; and
(iii) drying said high solid content microfibrillated cellulose suspension, through a simultaneous heating and mixing operation, comprising a grinding operation.

2. The method for drying as claimed in claim 1, wherein in step (ii), the solid contents is increased to >15 wt-%, or to > 20 wt-% , or to > 25 wt-% , or to > 30 wt-% .

3. The method of drying as claimed in any one of the preceding claims, wherein step (ii) comprises any one of a centrifugal force operation, pressing operation and dewatering operation.

4. The method as claimed in claim 3 wherein the dewatering operation comprises an electro-osmosis operation.

5. The method as claimed in claim 3, wherein the pressing operation comprises a wet pressing operation.

6. The method as claimed in any one of the preceding claims, wherein at step (iii) the temperature of the suspension is in the range of 75-99 °C, preferably about 80 °C.

7. The method as claimed in claim 7, wherein at step (iii) the suspension is heated from about room temperature to the range of 75-99 °C.

8. The method as claimed in any one of claims 1-6, wherein at step (iii) the temperature of the suspension is in the range of from 40 to 50 °C.

9. The method of drying as claimed in any one of claim 1-6, where step (iii) is performed under vacuum.

10. The method as claimed in any one of the preceding claims, wherein in step (iii) there is further provided a drying additive.

11. A substantially dry nanofibrillated polysaccharide product obtainable by the method as claimed in any one of claims 1-9.

12. Use of a dry nanofibrillated polysaccharide product as claimed in claim 11 in, or for the procuction of composites.

13. Use of a dry nanofibrillated polysaccharide product as claimed in claim 11, for any one of a rheology application, fixative agent, strength enhancing agent, emulsifying agent, excipient, paper applications, and in paper or paperboard of products thereof.

## Patentansprüche

1. Verfahren zum Trocknen von mikrofibrillierter Zellulose, um ein wesentlich trockenes mikrofibrilliertes Produkt zu erhalten, das die folgenden Schritte umfasst:
(i) Bereitstellen einer wässrigen Aufschlämmung von mikrofibrillierter Zellulose;
(ii) Erhöhen des Feststoffgehalts der Aufschlämmung, damit Ausbilden einer mikrofibrillierten Zelluloseaufschlämmung mit hohem Feststoffgehalt; und
(iii) Trocknen der mikrofibrillierten Zelluloseaufschlämmung mit hohem Feststoffgehalt durch einen gleichzeitigen Erhitzungs- und Mischvorgang, der einen Mahlvorgang umfasst.

2. Verfahren zum Trocknen nach Anspruch 1, wobei in Schritt (ii) der Feststoffgehalt auf < 15 Gew.-% oder auf < 20 Gew.-% oder auf < 25 Gew.-% oder auf < 30 Gew.-% erhöht wird.

3. Verfahren des Trocknens nach einem der vorhergehenden Ansprüche, wobei Schritt (ii) einen von Zentrifugalkraftvorgang, Pressvorgang und Entwässerungsvorgang umfasst.

4. Verfahren nach Anspruch 3, wobei der Entwässerungsvorgang einen Elektroosmosevorgang umfasst.

5. Verfahren nach Anspruch 3, wobei der Pressvorgang einen nassen Pressvorgang umfasst.

6. Verfahren nach einem der vorhergehenden Ansprüche, wobei in Schritt (iii) die Temperatur der Aufschlämmung im Bereich von 75 - 99 °C, vorzugsweise ungefähr 80 °C, liegt.

7. Verfahren nach Anspruch 7, wobei in Schritt (iii) die Aufschlämmung von ungefähr Raumtemperatur auf den Bereich von 75 - 99 °C erhitzt wird.

8. Verfahren nach einem der Ansprüche 1 - 6, wobei in Schritt (iii) die Temperatur der Aufschlämmung im Bereich von 40 bis 50 °C liegt.

9. Verfahren des Trocknens nach einem der Ansprüche 1 - 6, wobei Schritt (iii) unter Vakuum ausgeführt wird.

10. Verfahren nach einem der vorhergehenden Ansprüche, wobei in Schritt (iii) ferner ein Trocknungszusatzmittel vorgesehen wird.

11. Wesentlich trockenes, nanofibrilliertes Polysaccharidprodukt, das mithilfe des Verfahrens nach einem der Ansprüche 1 - 9 erhaltbar ist.

12. Anwendung eines trockenen, nanofibrillierten Polysaccharidprodukts nach Anspruch 11 in oder für die Produktion von Verbundstoffen.

13. Anwendung eines trockenen nanofibrillierten Polysaccharidprodukts nach Anspruch 11 für jedes von Rheologieanwendung, Fixiermittel, Verfestigungsmittel, Emulgiermittel, Arzneistoffträger, Papieranwendungen und in Papier oder Pappe von Produkten davon.

## Revendications

1. Procédé de séchage de cellulose microfibrillée pour obtenir un produit de cellulose microfibrillée essentiellement sec, comprenant les étapes suivantes :
(i) fourniture d'une suspension aqueuse de cellulose microfibrillée ;
(ii) augmentation de la teneur en solide de ladite suspension ; et
(iii) séchage de ladite suspension de cellulose microfibrillée à teneur en solide élevée, par une opération de chauffage et de mélange simultanés, comprenant une opération de broyage.

2. Procédé de séchage selon la revendication 1, dans lequel dans l'étape (ii), la teneur en solide est augmentée à > 15 % en poids, ou à > 20 % en poids, ou à > 25 % en poids ou à > 30 % en poids.

3. Procédé de séchage selon l'une quelconque des revendications précédentes, dans lequel l'étape (ii) comprend l'une quelconque d'une opération de force centrifuge, d'une opération de pressage et d'une opération de déshydratation.

4. Procédé selon la revendication 3 dans lequel l'opération de déshydratation comprend une opération d'électro-osmose.

5. Procédé selon la revendication 3, dans lequel l'opération de pressage comprend une opération de pressage humide.

6. Procédé selon l'une quelconque des revendications précédentes, dans lequel à l'étape (iii) la température de la suspension se situe dans la plage de 75 à 99 °C, de préférence à environ 80 °C.

7. Procédé selon la revendication 7, dans lequel à l'étape (iii) la suspension est chauffée d'environ la température ambiante à la plage de 75 à 99 °C.

8. Procédé selon l'une quelconque des revendications 1 à 6, dans lequel à l'étape (iii) la température de la suspension se situe dans la plage de 40 à 50 °C.

9. Procédé de séchage selon l'une quelconque des revendications 1 à 6, dans lequel l'étape (iii) est effectuée sous vide.

10. Procédé selon l'une quelconque des revendications précédentes, dans lequel dans l'étape (iii) est en outre fourni un additif de séchage.

11. Produit de polysaccharide nanofibrillé essentiellement sec que l'on peut obtenir par le procédé selon l'une quelconque des revendications 1 à 9.

12. Utilisation d'un produit de polysaccharide nanofibrillé sec comme revendiqué dans la revendication 11 dans, ou pour la production de composites.

13. Utilisation d'un produit de polysaccharide nanofibrillé sec comme revendiqué dans la revendication 11, pour l'un quelconque d'une application de rhéologie, d'un agent fixateur, d'un agent renforçant la résistance, d'un agent émulsifiant, d'un excipient, d'applications de papier et dans le papier ou le carton de leurs produits.
